# EUROPÄISCHE PATENTSCHRIFT

(11) **EP 3 045 226 B1**
(45) Veröffentlichungstag und Bekanntmachung des Hinweises auf die Patenterteilung: **21.08.2024**
(21) Anmeldenummer: 15151583.0
(22) Anmeldetag: 19.01.2015
(51) Int. Cl.: B01J 23/63, B01J 35/00, B01J 37/02

(54) **Doppelschichtiger Dreiweg-Katalysator mit verbesserter Alterungsstabilität**
Double layer three-way catalytic converter with improved ageing resistance
Catalyseur à triple voies à double interrupteur présentant une stabilité au vieillissement améliorée

(43) Veröffentlichungstag der Anmeldung: 20.07.2016
(73) Patentinhaber: Umicore AG & Co. KG, 63457 Hanau-Wolfgang (DE)
(72) Erfinder: DESPRES, Joel, 63517 Rodenbach (DE); RICHTER, Joerg-Michael, 60389 Frankfurt (DE); ROESCH, Martin, 63110 Rodgau (DE); SCHICHTEL, Nicole, 35510 Butzbach Hoch-Weisel (DE); SCHMIDT, Marcus, 65462 Ginsheim (DE); SCHOENHABER, Jan, 64287 Darmstadt (DE); SPIESS, Stephanie, 64289 Darmstadt (DE); WOLF, Anke, 64285 Darmstadt (DE)

(56) Entgegenhaltungen:
- EP-A2- 1 900 416
- WO-A1-2009/012348
- WO-A2-2011/056768

## Beschreibung

Die vorliegende Erfindung betrifft einen Dreiweg-Katalysator, der aus zwei übereinander liegenden, katalytisch aktiven Schichten aufgebaut ist und der sich für die Reinigung der Abgase von Verbrennungsmotoren eignet.

Dreiweg-Katalysatoren werden für die Reinigung der Abgase von im Wesentlichen stöchiometrisch betriebenen Verbrennungsmotoren eingesetzt. Beim stöchiometrischen Betrieb entspricht die dem Motor zugeführte Menge Luft genau der zur kompletten Verbrennung des Kraftstoffs benötigten Menge. In diesem Fall beträgt das Verbrennungsluftverhältnis λ, auch Luftzahl genannt, genau 1. Dreiweg-Katalysatoren sind in der Nähe von λ = 1 in der Lage, Kohlenwasserstoffe, Kohlenmonoxid und Stickoxide gleichzeitig zu unschädlichen Komponenten umzusetzen.

Als katalytisch aktive Materialien werden in der Regel Platingruppenmetalle, insbesondere Platin, Palladium und Rhodium eingesetzt, die beispielsweise auf γ-Aluminiumoxid als Trägermaterial vorliegen. Daneben enthalten Dreiweg-Katalysatoren Sauerstoffspeichermaterialien, beispielsweise Cer/Zirkonium-Mischoxide. In letzteren stellt Ceroxid, ein Seltenerdmetalloxid, die für die Sauerstoffspeicherung grundlegende Komponente dar. Neben Zirkoniumoxid und Ceroxid können diese Materialien zusätzliche Bestandteile wie weitere Seltenerdmetalloxide oder Erdalkalimetalloxide enthalten. Sauerstoffspeichermaterialien werden durch Aufbringen von katalytisch aktiven Materialien wie Platingruppenmetallen aktiviert und dienen somit auch als Trägermaterial für die Platingruppenmetalle.

Die Bestandteile eines Dreiweg-Katalysators können in einer einzigen Beschichtungsschicht auf einem inerten Katalysatorträger vorliegen, siehe beispielsweise EP1541220A1.

Häufig kommen aber doppelschichtige Katalysatoren zum Einsatz, die eine Trennung verschiedener katalytischer Vorgänge und damit eine optimale Abstimmung der katalytischen Wirkungen in den beiden Schichten ermöglichen. Katalysatoren der letztgenannten Art werden zum Beispiel in WO95/35152A1, WO2008/000449A2, EP0885650A2, EP1046423A2, EP1726359A1 und EP1974809A1 offenbart.

Die EP1974809A1 offenbart doppelschichtige Dreiweg-Katalysatoren, die in beiden Schichten Cer/Zirkonium-Mischoxide enthalten, wobei das Cer/Zirkonium-Mischoxid in der oberen Schicht jeweils einen höheren Anteil an Zirkonium aufweist als dasjenige in der unteren Schicht.

Die EP1726359A1 beschreibt doppelschichtige Dreiweg-Katalysatoren, die in beiden Schichten Cer/Zirkonium/Lanthan/Neodym-Mischoxide mit einem Zirkoniumgehalt von mehr als 80 Mol-% enthalten, wobei das Cer/Zirkonium/Lanthan/Neodym-Mischoxid in der oberen Schicht jeweils einen höheren Anteil an Zirkonium aufweisen kann als dasjenige in der unteren Schicht.

Auch die WO2008/000449A2 offenbart doppelschichtige Katalysatoren, die in beiden Schichten Cer/Zirkonium-Mischoxide enthalten und wobei wiederum das Mischoxid in der oberen Schicht einen höheren Anteil an Zirkonium aufweist. Zum Teil können die Cer/Zirkonium-Mischoxide auch durch Cer/Zirkonium/Lanthan/Neodym- bzw. Cer/Zirkonium/Lanthan/Yttrium-Mischoxide ersetzt sein.

In der WO2011056768A2 wird ein zwei-schichtiger Dreiwegekatalysator offenbart, der in einer ersten Schicht nur Palladium als Edelmetall aufweist und in einer zweiten Schicht eine Rhodiumkomponente enthält. Die erste Schicht enthält ein temperaturstabiles Metalloxid und die zweite Schicht eine Sauerstofspeicherkomponente in einer Menge von 50 - 90% bezogen auf diese Schicht.

Die WO2009012348A1 ist ebenfalls auf geschichtete Dreiwegekatalysatoren gerichtet. Hier werden 3-schichtige Katalysatoren beschrieben.In einer ersten Schicht befindet sich eine Platinkomponente auf einem ersten Trägeroxid. Die zweite Schicht beherbergt Rhodium auf einem zweiten Trägeroxid und die dritte Schicht weist Palladium auf einem dritten Trägeroxid auf.

In der EP1900416A2 wird ein Abgassystem aus 2 Abgaskatalysatoren mit Dreiwegefunktion beschrieben. Der Abstromseitig platzierte Katalysator hat eine höhere Sauerstoffspeicherfunktionalität und enthält Aluminiumoxid, ggf. 2 verschiedene Sauerstoffspeichermaterialien und Rhodium sowie Platin.

Die ständig steigenden Anforderungen an die Emissionsminderung von Verbrennungsmotoren machen eine stetige Weiterentwicklung der Katalysatoren notwendig. Die Dauerhaltbarkeitsanforderungen wurden in Europa mit der Gesetzgebungsstufe Euro 5 auf 160.000 km erhöht. In den USA werden sogar bis zu 150.000 Meilen Dauerhaltbarkeit vorausgesetzt. Daher gewinnt die Alterungsstabilität der Katalysatoren noch mehr Bedeutung. Als wichtige Kriterien für die Aktivität nach Alterung dienen zum einen die Anspringtemperaturen des Katalysators für die Umsetzung der Schadstoffe und zum anderen sein dynamisches Umsatzvermögen. Die Anspringtemperatur für einen Schadstoff gibt an, ab welcher Temperatur dieser Schadstoff zu mehr als zum Beispiel 50 % umgesetzt wird. Je niedriger diese Temperaturen sind, umso früher können die Schadstoffe nach einem Kaltstart umgesetzt werden. Bei Volllast können direkt am Motorausgang Abgastemperaturen von bis zu 1050 °C auftreten. Je besser die Temperaturstabilität des Katalysators ist, umso näher kann er am Motor angeordnet werden. Dies verbessert ebenfalls die Abgasreinigung nach einem Kaltstart.

Die europäische Abgasgesetzgebung sieht mit Inkrafttreten der Stufe Euro 6c ab September 2017 Abgasmessungen unter realen Bedingungen auf der Straße vor. Je nach Fahrbedingungen können dadurch deutlich anspruchsvollere Anforderungen an den Katalysator entstehen, insbesondere im Hinblick auf die dynamische Umsetzung von Kohlenmonoxid und Stickoxiden. Diese hohen Anforderungen müssen auch nach starker Alterung vom Katalysator bewältigt werden. Auch deshalb ist eine weitere Erhöhung der Alterungsstabilität von Dreiweg-Katalysatoren erforderlich.

Die Katalysatoren nach dem oben zitierten Stand der Technik weisen schon sehr gute Eigenschaften bezüglich Anspringtemperaturen und dynamischem Umsatzvermögen nach Alterung auf. Die gesteigerten gesetzlichen Vorgaben machen jedoch die Suche nach noch besseren Katalysatoren notwendig.

Es war daher die Aufgabe dieser Erfindung, einen Katalysator zur Verfügung zu stellen, der durch seine höhere Temperaturstabilität gegenüber den Katalysatoren des Standes der Technik weiter verringerte Anspringtemperaturen und ein verbessertes dynamisches Umsatzvermögen nach Alterung aufweist.

Es wurde nun überraschend gefunden, dass diese Aufgabe gelöst werden kann, wenn man die als Bestandteile der Sauerstoffspeichermaterialien vorliegenden Seltenerdelemente in bestimmter Weise auf die beiden Schichten eines doppelschichtigen Dreiweg-Katalysators verteilt.

Gegenstand der vorliegenden Erfindung ist somit ein Katalysator, der zwei Schichten auf einem inerten Katalysatorträger umfasst, wobei
- eine Schicht A mindestens ein Platingruppenmetall, sowie ein Cer/Zirkonium/Seltenerdmetall-Mischoxid enthält und
- eine auf Schicht A aufgebrachte Schicht B mindestens ein Platingruppenmetall, sowie ein Cer/Zirkonium/Seltenerdmetall-Mischoxid enthält,
dadurch gekennzeichnet, dass der Anteil des Seltenerdmetalloxids im Cer/Zirkonium/Seltenerdmetall-Mischoxid von Schicht A kleiner ist als der Anteil des Seltenerdmetalloxids im Cer/Zirkonium/Seltenerdmetall-Mischoxid von Schicht B, jeweils gerechnet in Gew.-% und bezogen auf das Cer/Zirkonium/Seltenerdmetall-Mischoxid, wobei als Platingruppenmetall Schicht A Palladium und Schicht B Rhodium oder Palladium und Rhodium enthält und wobei das Seltenerdmetalloxid in den Cer/Zirkon/Seltenerdmetall-Mischoxiden Lanthanoxid, Yttriumoxid, Praseodymoxid, Neodymoxid, Samariumoxid oder Mischungen von einem oder mehreren dieser Metalloxide ist.

Schicht A und Schicht B enthalten als Platingruppenmetall unabhängig voneinander , wobei
Schicht A Palladium und Schicht B Rhodium oder Palladium und Rhodium enthält.

Als Trägermaterialien für die Platingruppenmetalle können in Schicht A und/oder in Schicht B die Cer/Zirkonium/Seltenerdmetall-Mischoxide dienen. Darüber hinaus können sie in Schicht A und/oder in Schicht B aber auch vollständig oder zum Teil auf aktivem Aluminiumoxid geträgert sein. In Ausführungsformen der vorliegenden Erfindung enthalten deshalb Schicht A und Schicht B aktives Aluminiumoxid. Besonders bevorzugt ist es, wenn das aktive Aluminiumoxid durch eine Dotierung, insbesondere mit Lanthanoxid, stabilisiert ist. Bevorzugte aktive Aluminiumoxide enthalten 1 bis 6 Gew.-%, insbesondere 3 bis 4 Gew.-%, Lanthanoxid (La₂O₃).

Der Begriff "aktives Aluminiumoxid" ist dem Fachmann bekannt. Er bezeichnet insbesondere γ-Aluminiumoxid mit einer Oberfläche von 100 bis 200 m²/g. Aktives Aluminiumoxid ist in der Literatur vielfach beschrieben und am Markt erhältlich.

Der Begriff "Cer/Zirkonium/Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerd-metall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.

Im Übrigen umfasst der Begriff Seltenerdmetall bzw. Seltenerdmetalloxid im Sinne vorliegender Erfindung kein Cer bzw. kein Ceroxid.

Die Seltenerdmetalloxide in den Cer/Zirkonium/Seltenerdmetall-Mischoxiden sind Lanthanoxid, Yttriumoxid, Praseodymoxid, Neodymoxid, Samariumoxid und Mischungen von einem oder mehreren dieser Metalloxide in Betracht.

Bevorzugt sind Lanthanoxid, Yttriumoxid, Praseodymoxid und Mischungen von einem oder mehreren dieser Metalloxide. Besonders bevorzugt sind Lanthanoxid, Yttriumoxid und ganz besonders bevorzugt ist eine Mischung von Lanthanoxid und Yttriumoxid.

Erfindungsgemäß ist der Anteil des Seltenerdmetalloxids im Cer/Zirkonium/Seltenerdmetall-Mischoxid von Schicht A kleiner als der Anteil des Seltenerdmetalloxids im Cer/Zirkonium/Seltenerdmetall-Mischoxid von Schicht B, jeweils gerechnet in Gew.-% und bezogen auf das Cer/Zirkonium/Seltenerdmetall-Mischoxid.

Der Anteil in Schicht A beträgt insbesondere 1 bis 12 Gew.-%, bevorzugt 3 bis 10 Gew.-% und besonders bevorzugt 6 bis 9 Gew.-%, jeweils bezogen auf das Cer/Zirkonium/Seltenerdmetall-Mischoxid.

Der Anteil in Schicht B beträgt insbesondere 5 bis 25 Gew.-%, bevorzugt 10 bis 20 Gew.-% und besonders bevorzugt 14 bis 18 Gew.-%, jeweils bezogen auf das Cer/Zirkonium/Seltenerdmetall-Mischoxid.

Erfindungsgemäß kann das Verhältnis von Ceroxid zu Zirkoniumoxid in den Cer/Zirkonium/Seltenerdmetall-Mischoxiden in weiten Grenzen variieren. In Schicht A beträgt es beispielsweise 0,1 bis 1,0, bevorzugt von 0,2 bis 0,7, besonders bevorzugt von 0,3 bis 0,5.

In Schicht B beträgt es beispielsweise 0,1 bis 1,0, bevorzugt von 0,2 bis 0,7, besonders bevorzugt von 0,3 bis 0,5.

In Ausführungsformen der vorliegenden Erfindung enthalten eine Schicht oder beide Schichten Erdalkaliverbindungen wie z.B. Bariumoxid oder Bariumsulfat. Bevorzugte Ausführungsformen enthalten Bariumsulfat in Schicht A. Die Menge an Bariumsulfat beträgt insbesondere 5 bis 20 g/l Volumen des inerten Katalysatorträgers.

In weiteren Ausführungsformen der vorliegenden Erfindung enthält eine oder beide Schichten zusätzlich Additive wie Seltenerdverbindungen wie z.B. Lanthanoxid und/oder Binder, wie z.B. Aluminiumverbindungen. Diese Additive werden in Mengen verwendet, die in weiten Grenzen variieren können und die der Fachmann im konkreten Fall mit einfachen Mitteln bestimmen kann.

Eine bevorzugte Ausführungsform der vorliegenden Erfindung betrifft einen Katalysator, der zwei Schichten auf einem inerten Katalysatorträger umfasst, wobei
- eine Schicht A Palladium, aktives Aluminiumoxid, sowie ein Cer/Zirkonium/Lanthan/Yttrium-Mischoxid enthält und
- eine auf Schicht A aufgebrachte Schicht B Rhodium oder Palladium und Rhodium, aktives Aluminiumoxid, sowie ein Cer/Zirkonium/Lanthan/Yttrium-Mischoxid enthält,
dadurch gekennzeichnet, dass der Anteil der Summe an Lanthanoxid und Yttriumoxid im Cer/Zirkonium/Lanthan/Yttrium-Mischoxid von Schicht A kleiner ist als der Anteil der Summe an Lanthanoxid und Yttriumoxid im Cer/Zirkonium/ Lanthan/Yttrium-Mischoxid von Schicht B, jeweils gerechnet in Gew.-% und bezogen auf das Cer/Zirkonium/Seltenerdmetall-Mischoxid. Weiter bevorzugt ist der Anteil der Summe aus Lanthanoxid und Yttriumoxid im Cer/Zirkonium/Lanthan/Yttrium-Mischoxid der Schicht A 6 bis 9 Gew.-% bezogen auf das Cer/Zirkonium/Lanthan/Yttrium-Mischoxid der Schicht A und im Cer/Zirkonium/Lanthan/Yttrium-Mischoxid der Schicht B 14 bis 18 Gew.-% bezogen auf das Cer/Zirkonium/Lanthan/Yttrium-Mischoxid der Schicht B beträgt, jeweils gerechnet in Gew.-% und bezogen auf das Cer/Zirkonium/Seltenerdmetall-Mischoxid.

In einer weiteren Ausführungsform der vorliegenden Erfindung liegt Schicht A direkt auf dem inerten Katalysatorträger, d.h. zwischen dem inerten Katalysatorträger und Schicht A befindet sich keine weitere Schicht bzw. kein "undercoat".

In einer weiteren Ausführungsform der vorliegenden Erfindung steht Schicht B mit dem Abgasstrom in direktem Kontakt, d.h. auf Schicht B befindet sich keine weitere Schicht bzw. kein "overcoat".

Als katalytisch inerter Katalysatorträger eignen sich Wabenkörper aus Keramik oder Metall mit einem Volumen V, die parallele Strömungskanäle für die Abgase des Verbrennungsmotors aufweisen. Es kann sich sowohl um sogenannte Durchflusswabenkörper, als auch um Wandflussfilter handeln.

Die Wandflächen der Strömungskanäle werden erfindungsgemäß mit den beiden Katalysatorschichten A und B beschichtet. Zur Beschichtung des Katalysatorträgers mit Schicht A werden die für diese Schicht vorgesehenen Feststoffe in Wasser suspendiert und mit der so erhaltenen Beschichtungssuspension der Katalysatorträger beschichtet. Der Vorgang wird mit einer Beschichtungssuspension wiederholt, die die für Schicht B vorgesehenen Feststoffe in Wasser suspendiert enthält.

Bevorzugt werden sowohl Schicht A, als auch Schicht B über die gesamte Länge des inerten Katalysatorträgers beschichtet. Dies bedeutet, dass Schicht B Schicht A vollständig überdeckt und folglich nur Schicht B mit dem Abgasstrom in direkten Kontakt kommt.

Bei den folgenden Beispielen 1 bis 3, sowie Vergleichsbeispiel 1 wurden Zweischichtkatalysatoren durch zweimalige Beschichtung von Durchflusswabenträgern aus Keramik mit 93 Zellen pro cm² und der Wandstärke 0,09 mm, sowie der Abmessungen 11,8 cm Durchmesser und 10,5 cm Länge hergestellt. Dazu wurden jeweils zwei verschiedene Suspensionen für Schicht A und B hergestellt. Dann wurde der Träger zunächst mit der Suspension für Schicht A beschichtet und anschließend 4 Stunden bei 500°C in Luft kalziniert. Danach wurde der mit Schicht A beschichtete Träger mit der Suspension für Schicht B beschichtet und anschließend unter den gleichen Bedingungen wie bei Schicht A kalziniert.

### Beispiel 1

Ein Zweischicht-Katalysator wurde hergestellt, indem zunächst zwei Suspensionen hergestellt wurden. Die Zusammensetzung der ersten Suspension für Schicht A betrug (bezogen auf das Volumen des Katalysatorträgers)
40 g/L mit 4 Gew.-% La₂O₃ stabilisiertes aktiviertes Aluminiumoxid
40 g/L Cer/Zirkonium/Lanthan/Yttrium-Mischoxid mit 25 Gew.-% CeOz,
67,5 Gew.-% ZrOz, 3,5 Gew.-% La₂O₃ und 4 Gew.-% Y₂O₃
5 g/L BaSO₄
3,178 g/L Pd

Die Zusammensetzung der zweiten Suspension für Schicht B betrug (bezogen auf das Volumen des Katalysatorträgers)
60 g/L mit 4 Gew.-% La₂O₃ stabilisiertes aktiviertes Aluminiumoxid
47 g/L Cer/Zirkonium/Lanthan/Yttrium-Mischoxid mit 24 Gew.-% CeOz, 60 Gew.-% ZrOz, 3,5 Gew.-% La₂O₃ und 12,5 Gew.-% Y₂O₃
0,177 g/L Pd
0,177 g/L Rh

### Beispiel 2

Ein Zweischicht-Katalysator wurde analog zu Beispiel 1 hergestellt. Die Zusammensetzung der ersten Suspension für Schicht A betrug
40 g/L mit 4 Gew.-% La₂O₃ stabilisiertes aktiviertes Aluminiumoxid
40 g/L Cer/Zirkonium/Lanthan/Yttrium-Mischoxid mit 20,5 Gew.-% CeO₂,
67,5 Gew.-% ZrOz, 4,5 Gew.-% La₂O₃ und 7,5 Gew.-% Y₂O₃
5 g/L BaSO₄
3,178 g/L Pd

Die Zusammensetzung der zweiten Suspension für Schicht B betrug
60 g/L mit 4 Gew.-% La₂O₃ stabilisiertes aktiviertes Aluminiumoxid
47 g/L Cer/Zirkonium/Lanthan/Yttrium-Mischoxid mit 20 Gew.-% CeOz, 60 Gew.-% ZrOz, 5 Gew.-% La₂O₃ und 15 Gew.-% Y₂O₃
0,177 g/L Pd
0,177 g/L Rh

### Beispiel 3

Ein Zweischicht-Katalysator wurde analog zu Beispiel 1 hergestellt. Die Zusammensetzung der ersten Suspension für Schicht A betrug
40 g/L mit 4 Gew.-% La₂O₃ stabilisiertes aktiviertes Aluminiumoxid
40 g/L Cer/Zirkonium/Lanthan/Yttrium-Mischoxid mit 20,5 Gew.-% CeOz,
67,5 Gew.-% ZrOz, 4,5 Gew.-% La₂O₃ und 7,5 Gew.-% Y₂O₃
5 g/L BaSO₄
3,178 g/L Pd

Die Zusammensetzung der zweiten Suspension für Schicht B betrug
60 g/L mit 4 Gew.-% La₂O₃ stabilisiertes aktiviertes Aluminiumoxid
47 g/L Cer/Zirkonium/Lanthan/Yttrium-Mischoxid mit 15 Gew.-% CeOz, 60 Gew.-% ZrOz, 7 Gew.-% La₂O₃ und 18 Gew.-% Y₂O₃
0,177 g/L Pd
0,177 g/L Rh

### Vergleichsbeispiel 1

Ein Zweischicht-Katalysator wurde analog zu Beispiel 1 hergestellt. Die Zusammensetzung der ersten Suspension für Schicht A betrug
40 g/L mit 4 Gew.-% La₂O₃ stabilisiertes aktiviertes Aluminiumoxid
40 g/L Cer/Zirkonium/Lanthan/Yttrium-Mischoxid mit 25 Gew.-% CeOz,
67,5 Gew.-% ZrOz, 3,5 Gew.-% La₂O₃ und 4 Gew.-% Y₂O₃
5 g/L BaSO₄
3,178 g/L Pd

Die Zusammensetzung der zweiten Suspension für Schicht B betrug
60 g/L mit 4 Gew.-% La₂O₃ stabilisiertes aktiviertes Aluminiumoxid
47 g/L Cer/Zirkonium/Lanthan/Yttrium-Mischoxid mit 25 Gew.-% CeOz,
67,5 Gew.-% ZrOz, 3,5 Gew.-% La₂O₃ und 4 Gew.-% Y₂O₃
0,177 g/L Pd
0,177 g/L Rh

Beispiel 1 und Vergleichsbeispiel 1 wurden in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 76 Stunden.

Anschließend wurden an einem Motorprüfstand das Anspringverhalten bei konstanter mittlerer Luftzahl λ und die dynamische Umsetzung bei Änderung von λ geprüft.

Tabelle 1 enthält die Temperaturen T₅₀, bei denen jeweils 50% der betrachteten Komponente umgesetzt werden. Dabei wurde das Anspringverhalten bei stöchiometrischer Abgaszusammensetzung (λ = 0,999 mit ±3,4% Amplitude) bestimmt.

**Tabelle 1: Ergebnisse des Anspringverhaltens nach Alterung für Beispiel 1 und Vergleichsbeispiel 1**

| | T₅₀ HC stöch | T₅₀ CO stöch | T₅₀ NOx stöch |
|---|---|---|---|
| Vergleichsbeispiel 1 | 391 | 402 | 398 |
| Beispiel 1 | 381 | 391 | 388 |

Das dynamische Umsatzverhalten wurde in einem Bereich für λ von 0,99 bis 1,01 bei einer konstanten Temperatur von 510°C bestimmt. Die Amplitude von λ betrug dabei ±3,4%. Tabelle 2 enthält den Umsatz am Schnittpunkt der CO- und der NOx-Umsatzkurven, sowie den zugehörigen HC-Umsatz.

**Tabelle 2: Ergebnisse des dynamischen Umsatzverhaltens nach Alterung für Beispiel 1 und Vergleichsbeispiel 1**

| | CO/NOx Umsatz am Kreuzungspunkt | HC Umsatz am λ des CO/NOx-Kreuzungspunkts |
|---|---|---|
| Vergleichsbeispiel 1 | 73,5% | 92 |
| Beispiel 1 | 79% | 93 |

Das erfindungsgemäße Beispiel 1 zeigt eine deutliche Verbesserung beim Anspringverhalten und beim dynamischen CO/NOx-Umsatz nach Alterung.

Bei den folgenden Beispielen 4 und 5 sowie Vergleichsbeispiel 2 wurden Zweischichtkatalysatoren durch zweimalige Beschichtung von Durchflusswabenträgern aus Keramik mit 93 Zellen pro cm² und der Wandstärke 0,1 mm, sowie der Abmessungen 10,2 cm Durchmesser und 15,2 cm Länge hergestellt. Dazu wurden jeweils zwei verschiedene Suspensionen für Schicht A und B hergestellt. Dann wurde der Träger zunächst mit der Suspension für Schicht A beschichtet und anschließend 4 Stunden bei 500°C in Luft kalziniert. Danach wurde der mit Schicht A beschichtete Träger mit der Suspension für Schicht B beschichtet und anschließend unter den gleichen Bedingungen wie bei Schicht A kalziniert.

### Beispiel 4

Ein Zweischicht-Katalysator wurde hergestellt, indem zunächst zwei Suspensionen hergestellt wurden. Die Zusammensetzung der ersten Suspension für Schicht A betrug (bezogen auf das Volumen des Katalysatorträgers)
70 g/L mit 4 Gew.-% La₂O₃ stabilisiertes aktiviertes Aluminiumoxid
50 g/L Cer/Zirkonium/Lanthan/Yttrium-Mischoxid mit 39 Gew.-% CeOz, 51 Gew.-% ZrOz, 3 Gew.-% La₂O₃ und 7 Gew.-% Y₂O₃
5 g/L BaSO₄
1,483 g/L Pd

Die Zusammensetzung der zweiten Suspension für Schicht B betrug (bezogen auf das Volumen des Katalysatorträgers)
70 g/L mit 4 Gew.-% La₂O₃ stabilisiertes aktiviertes Aluminiumoxid
65 g/L Cer/Zirkonium/Lanthan/Yttrium-Mischoxid mit 24 Gew.-% CeOz, 60 Gew.-% ZrOz, 3,5 Gew.-% La₂O₃ und 12,5 Gew.-% Y₂O₃
0,177 g/L Pd
0,177 g/L Rh

### Beispiel 5

Ein Zweischicht-Katalysator wurde analog zu Beispiel 4 hergestellt. Die Zusammensetzung der ersten Suspension für Schicht A betrug
70 g/L mit 4 Gew.-% La₂O₃ stabilisiertes aktiviertes Aluminiumoxid
50 g/ Cer/Zirkonium/Lanthan/Yttrium-Mischoxid mit 25 Gew.-% CeO2, 67,5 Gew.-% ZrOz, 3,5 Gew.-% La₂O₃ und 4 Gew.-% Y₂O₃
5 g/L BaSO₄
1,483 g/L Pd

Die Zusammensetzung der zweiten Suspension für Schicht B betrug
70 g/L mit 4 Gew.-% La₂O₃ stabilisiertes aktiviertes Aluminiumoxid
65 g/L Cer/Zirkonium/Lanthan/Yttrium-Mischoxid mit 24 Gew.-% CeOz, 60 Gew.-% ZrOz, 3,5 Gew.-% La₂O₃ und 12,5 Gew.-% Y₂O₃
0,177 g/L Pd
0,177 g/L Rh

### Vergleichsbeispiel 2

Ein Zweischicht-Katalysator wurde analog zu Beispiel 4 hergestellt. Die Zusammensetzung der ersten Suspension für Schicht A betrug
70 g/L mit 4 Gew.-% La₂O₃ stabilisiertes aktiviertes Aluminiumoxid
50 g/L Cer/Zirkonium/Lanthan/Yttrium-Mischoxid mit 39 Gew.-% CeOz, 51 Gew.-% ZrOz, 3 Gew.-% La₂O₃ und 7 Gew.-% Y₂O₃
5 g/L BaSO₄
1,483 g/L Pd

Die Zusammensetzung der zweiten Suspension für Schicht B betrug
70 g/L mit 4 Gew.-% La₂O₃ stabilisiertes aktiviertes Aluminiumoxid
65 g/L Cer/Zirkonium/Lanthan/Yttrium-Mischoxid mit 22 Gew.-% CeOz, 68 Gew.-% ZrOz, 2 Gew.-% La₂O₃, 5 Gew.-% Nd₂O₃ und 3 Gew.-% Y₂O₃
0,177 g/L Pd
0,177 g/L Rh

Beispiele 4 und 5, sowie Vergleichsbeispiel 2 wurden in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 76 Stunden.

Anschließend wurden an einem Motorprüfstand das Anspringverhalten bei konstanter mittlerer Luftzahl λ und die dynamische Umsetzung bei Änderung von λ geprüft.

Tabelle 3 enthält die Temperaturen T₅₀, bei denen jeweils 50% der betrachteten Komponente umgesetzt werden. Dabei wurde das Anspringverhalten bei stöchiometrischer Abgaszusammensetzung (λ = 0,999 mit ±3,4% Amplitude) und bei leicht magerer

Abgaszusammensetzung (λ = 1,05 ohne Amplitude) bestimmt.

**Tabelle 3: Ergebnisse des Anspringverhaltens nach Alterung für Beispiel 4 und 5 und Vergleichsbeispiel 2**

| | T₅₀ HC stöch | T₅₀ CO stöch | T₅₀ NOx stöch | T₅₀ HC mager | T₅₀ CO mager |
|---|---|---|---|---|---|
| Vergleichsbeispiel 2 | 403 | 420 | 416 | 383 | 382 |
| Beispiel 4 | 391 | 411 | 401 | 371 | 369 |
| Beispiel 5 | 384 | 397 | 392 | 370 | 369 |

Das dynamische Umsatzverhalten wurde in einem Bereich für λ von 0,99 bis 1,01 bei einer konstanten Temperatur von 510°C bestimmt. Die Amplitude von λ betrug dabei ±3,4%. Tabelle 4 enthält den Umsatz am Schnittpunkt der CO- und der NOx-Umsatzkurven, sowie den zugehörigen HC-Umsatz.

**Tabelle 4: Ergebnisse des dynamischen Umsatzverhaltens nach Alterung für Beispiel 4 und 5 und Vergleichsbeispiel 2**

| | CO/NOx Kreuzungs-punkt | HC Umsatz am Lambda des CO/NOx-Kreuzungspunkts |
|---|---|---|
| Vergleichsbeispiel 2 | 81,5% | 95% |
| Beispiel 4 | 86,5% | 95,5% |
| Beispiel 5 | 95% | 96,5% |

Die erfindungsgemäßen Beispiele 4 und 5 zeigen eine deutliche Verbesserung beim Anspringverhalten und beim dynamischen CO/NOx-Umsatz nach Alterung, wobei Beispiel 5 die größte Aktivität aufweist.

Weitere Beispiele wurden analog Beispiel 5 angefertigt, mit dem Unterschied, dass in den Cer/Zirkonium/Seltenerdmetall-Mischoxiden Seltenerdmetalloxide (SEₓO_{y}) wie in Tabelle 5 angegeben verwendet wurden.

**Tabelle 5**

| | | | | SE_{X}O_{y} 1 | | SE_{X}O_{y} 2 | |
|---|---|---|---|---|---|---|---|
| Beispiel | Schicht | Gew. -% CeO₂ | Gew.-% ZrO₂ | | Gew.-% | | Gew.-% |
| 6 | A | 40 | 50 | La₂O₃ | 5 | - | - |
| | B | 30 | 55 | La₂O₃ | 12 | - | - |
| 7 | A | 40 | 50 | Y₂O₃ | 7,5 | - | - |
| | B | 30 | 55 | Y₂O₃ | 15 | - | - |
| 8 | A | 40 | 50 | La₂O₃ | 5 | Pr₆O₁₁ | 5 |
| | B | 30 | 55 | La₂O₃ | 5 | Pr₆O₁₁ | 10 |
| 9 | A | 30 | 63 | La₂O₃ | 2 | Nd₂O₃ | 5 |
| | B | 25 | 60 | La₂O₃ | 5 | Nd₂O₃ | 10 |
| 10 | A | 30 | 62 | Nd₂O₃ | 3 | Pr₆O₁₁ | 5 |
| | B | 30 | 57 | Nd₂O₃ | 5 | Pr₆O₁₁ | 8 |
| 11 | A | 40 | 54 | La₂O₃ | 3 | Sm₂O₃ | 3 |
| | B | 30 | 55 | La₂O₃ | 5 | Sm₂O₃ | 10 |
| 12 | A | 40 | 51,5 | Nd₂O₃ | 3,5 | Y₂O₃ | 5 |
| | B | 30 | 55 | Nd₂O₃ | 5 | Y₂O₃ | 10 |

## Patentansprüche

1. Katalysator, der zwei Schichten auf einem inerten Katalysatorträger umfasst, wobei
• eine Schicht A mindestens ein Platingruppenmetall, sowie ein Cer/Zirkonium/Seltenerdmetall-Mischoxid enthält und
• eine auf Schicht A aufgebrachte Schicht B mindestens ein Platingruppenmetall, sowie ein Cer/Zirkonium/Seltenerdmetall-Mischoxid enthält,
**dadurch gekennzeichnet, dass** der Anteil des Seltenerdmetalls im Cer/Zirkonium/Seltenerdmetall-Mischoxid von Schicht A kleiner ist als der Anteil des Seltenerdmetalls im Cer/Zirkonium/Seltenerdmetall-Mischoxid von Schicht B, jeweils gerechnet in Gew.-% und bezogen auf das Cer/Zirkonium/Seltenerdmetall-Mischoxid, wobei als Platingruppenmetall Schicht A Palladium und Schicht B Rhodium oder Palladium und Rhodium enthält und wobei das Seltenerdmetalloxid in den Cer/Zirkonium/Seltenerdmetall-Mischoxiden Lanthanoxid, Yttriumoxid, Praseodymoxid, Neodymoxid, Samariumoxid oder Mischungen von einem oder mehreren dieser Metalloxide ist.

2. Katalysator gemäß Anspruch 1, **dadurch gekennzeichnet, dass** Schicht A und Schicht B aktives Aluminiumoxid enthalten.

3. Katalysator gemäß Anspruch 2, **dadurch gekennzeichnet, dass** das Platingruppenmetall in Schicht A und/oder in Schicht B vollständig oder zum Teil auf aktivem Aluminiumoxid geträgert ist.

4. Katalysator gemäß einem oder mehreren der Ansprüche 1 bis 3, **dadurch gekennzeichnet, dass** das Seltenerdmetalloxid in den Cer/Zirkonium/Seltenerdmetall-Mischoxiden eine Mischung aus Lanthanoxid und Yttriumoxid ist.

5. Katalysator gemäß einem oder mehreren der Ansprüche 1 bis 4, **dadurch gekennzeichnet, dass** der Anteil des Seltenerdmetalloxids im Cer/Zirkonium/Seltenerdmetall-Mischoxid in Schicht A 1 bis 12 Gew.-%, bevorzugt 3 bis 10 Gew.-% und besonders bevorzugt 6 bis 9 Gew.-%, jeweils bezogen auf das Cer/Zirkonium/Seltenerdmetall-Mischoxid, beträgt.

6. Katalysator gemäß einem oder mehreren der Ansprüche 1 bis 5, **dadurch gekennzeichnet, dass** der Anteil des Seltenerdmetalloxids im Cer/Zirkonium/ Seltenerdmetall-Mischoxid in Schicht B 2 bis 25 Gew.-%, bevorzugt 10 bis 20 Gew.-% und besonders bevorzugt 14 bis 18 Gew.-%, jeweils bezogen auf das Cer/Zirkonium/Seltenerdmetall-Mischoxid, beträgt.

7. Katalysator gemäß einem oder mehreren der Ansprüche 1 bis 6, **dadurch gekennzeichnet, dass** das Gewichtsverhältnis von Ceroxid zu Zirkoniumoxid im Cer/Zirkonium/Seltenerdmetall-Mischoxid in Schicht A 0,1 bis 1,0, bevorzugt 0,2 bis 0,7, besonders bevorzugt 0,3 bis 0,5 beträgt.

8. Katalysator gemäß einem oder mehreren der Ansprüche 1 bis 7, **dadurch gekennzeichnet, dass** das Gewichtsverhältnis von Ceroxid zu Zirkoniumoxid im Cer/Zirkonium/Seltenerdmetall-Mischoxid in Schicht B 0,1 bis 1,0, bevorzugt 0,2 bis 0,7, besonders bevorzugt 0,3 bis 0,5 beträgt.

9. Katalysator gemäß einem oder mehreren der Ansprüche 1 bis 8, **dadurch gekennzeichnet, dass** er zwei Schichten auf einem inerten Katalysatorträger umfasst, wobei
• eine Schicht A Palladium, aktives Aluminiumoxid, sowie ein Cer/Zirkonium/Lanthan/Yttrium-Mischoxid enthält und
• eine auf Schicht A aufgebrachte Schicht B Rhodium oder Palladium und Rhodium, aktives Aluminiumoxid, sowie ein Cer/Zirkonium/Lanthan/Yttrium-Mischoxid enthält,
**dadurch gekennzeichnet, dass** der Anteil der Summe an Lanthanoxid und Yttriumoxid im Cer/Zirkonium/Lanthan/Yttrium-Mischoxid von Schicht A kleiner ist als der Anteil der Summe an Lanthanoxid und Yttriumoxid im Cer/Zirkonium/ Lanthan/Yttrium-Mischoxid von Schicht B, jeweils gerechnet in Gew.-% und bezogen auf das Cer/Zirkonium/ Seltenerdmetall-Mischoxid.

10. Katalysator gemäß Anspruch 9, **dadurch gekennzeichnet, dass** der Anteil der Summe aus Lanthanoxid und Yttriumoxid im Cer/Zirkonium/Lanthan/Yttrium-Mischoxid der Schicht A 6 bis 9 Gew.-% bezogen auf das Cer/Zirkonium/Lanthan/Yttrium-Mischoxid der Schicht A und im Cer/Zirkonium/Lanthan/Yttrium-Mischoxid der Schicht B 14 bis 18 Gew.-% bezogen auf das Cer/Zirkonium/Lanthan/Yttrium-Mischoxid der Schicht B beträgt, jeweils gerechnet in Gew.-% und bezogen auf das Cer/Zirkonium/Seltenerdmetall-Mischoxid.

## Claims

1. Catalyst comprising two layers on an inert catalyst support, wherein
• a layer A contains at least one platinum-group metal, and a cerium/zirconium/rare-earth metal mixed oxide, and
• a layer B applied to layer A contains at least one platinum-group metal, and a cerium/zirconium/rare-earth metal mixed oxide,
**characterized in that** the proportion of rare-earth metal in the cerium/zirconium/rare-earth metal mixed oxide of layer A is smaller than the proportion of rare-earth metal in the cerium/zirconium/rare-earth metal mixed oxide of layer B, in each case calculated in wt.% and based on the cerium/zirconium/rare-earth metal mixed oxide, wherein, as the platinum-group metal, layer A contains palladium and layer B contains rhodium or palladium and rhodium, and wherein the rare-earth metal oxide in the cerium/zirconium/rare-earth metal mixed oxides is lanthanum oxide, yttrium oxide, praseodymium oxide, neodymium oxide, samarium oxide, or mixtures of one or more of these metal oxides.

2. Catalyst according to claim 1, **characterized in that** layer A and layer B contain active aluminum oxide.

3. Catalyst according to claim 2, **characterized in that** the platinum-group metal in layer A and/or in layer B is supported fully or in part on active aluminum oxide.

4. Catalyst according to one or more of claims 1 to 3, **characterized in that** the rare-earth metal oxide in the cerium/zirconium/rare-earth metal mixed oxides is a mixture of lanthanum oxide and yttrium oxide.

5. Catalyst according to one or more of claims 1 to 4, **characterized in that** the proportion of the rare-earth metal oxide in the cerium/zirconium/rare-earth metal mixed oxide in layer A is 1 to 12 wt.%, preferably 3 to 10 wt.%, and particularly preferably 6 to 9 wt.%, in each case based on the cerium/zirconium/rare-earth metal mixed oxide.

6. Catalyst according to one or more of claims 1 to 5, **characterized in that** the proportion of the rare-earth metal oxide in the cerium/zirconium/rare-earth metal mixed oxide in layer B is 2 to 25 wt.%, preferably 10 to 20 wt.%, and particularly preferably 14 to 18 wt.%, in each case based on the cerium/zirconium/rare-earth metal mixed oxide.

7. Catalyst according to one or more of claims 1 to 6, **characterized in that** the weight ratio of cerium oxide to zirconium oxide in the cerium/zirconium/rare-earth metal mixed oxide in layer A is 0.1 to 1.0, preferably 0.2 to 0.7, particularly preferably 0.3 to 0.5.

8. Catalyst according to one or more of claims 1 to 7, **characterized in that** the weight ratio of cerium oxide to zirconium oxide in the cerium/zirconium/rare-earth metal mixed oxide in layer B is 0.1 to 1.0, preferably 0.2 to 0.7, particularly preferably 0.3 to 0.5.

9. Catalyst according to one or more of claims 1 to 8, **characterized in that** it comprises two layers on an inert catalyst support, wherein
• a layer A contains palladium, active aluminum oxide, and a cerium/zirconium/lanthanum/yttrium mixed oxide, and
• a layer B applied to layer A contains rhodium or palladium and rhodium, active aluminum oxide, and a cerium/zirconium/lanthanum/yttrium mixed oxide,
**characterized in that** the proportion of the sum of lanthanum oxide and yttrium oxide in the cerium/zirconium/lanthanum/yttrium mixed oxide of layer A is smaller than the proportion of the sum of lanthanum oxide and yttrium oxide in the cerium/zirconium/lanthanum/yttrium mixed oxide of layer B, in each case calculated in wt.% and based on the cerium/zirconium/rare-earth metal mixed oxide.

10. Catalyst according to claim 9, **characterized in that** the proportion of the sum of lanthanum oxide and yttrium oxide in the cerium/zirconium/lanthanum/yttrium mixed oxide of layer A is 6 to 9 wt.%, based on the cerium/zirconium/lanthanum/yttrium mixed oxide of layer A, and is 14 to 18 wt.% in the cerium/zirconium/lanthanum/yttrium mixed oxide of layer B, based on the cerium/zirconium/lanthanum/yttrium mixed oxide of layer B, in each case calculated in wt.% and based on the cerium/zirconium/rare-earth metal mixed oxide.

## Revendications

1. Catalyseur, comprenant deux couches sur un support de catalyseur inerte, dans lequel
• une couche A contient au moins un métal du groupe du platine ainsi qu'un oxyde mixte de cérium/zirconium/métal de terres rares, et
• une couche B appliquée sur la couche A contient au moins un métal du groupe du platine ainsi qu'un oxyde mixte de cérium/zirconium/métal de terres rares,
**caractérisé en ce que** la proportion du métal de terres rares dans l'oxyde mixte de cérium/zirconium/métal de terres rares de la couche A est inférieure à la proportion du métal de terres rares dans l'oxyde mixte de cérium/zirconium/métal de terres rares de la couche B, calculées respectivement en % en poids et par rapport à l'oxyde mixte de cérium/zirconium/métal de terres rares, dans lequel la couche A contient du palladium et la couche B du rhodium ou du palladium et du rhodium comme métaux du groupe du platine, et dans lequel l'oxyde de métal de terres rares dans les oxydes mixtes de cérium/zirconium/métal de terres rares est l'oxyde de lanthane, oxyde d'yttrium, oxyde de praséodyme, oxyde de néodyme, oxyde de samarium ou des mélanges d'un ou de plusieurs desdits oxydes métalliques.

2. Catalyseur selon la revendication 1, **caractérisé en ce que** la couche A et la couche B contiennent un oxyde d'aluminium actif.

3. Catalyseur selon la revendication 2, **caractérisé en ce que** le métal du groupe du platine dans la couche A et/ou dans la couche B est supporté entièrement ou partiellement sur un oxyde d'aluminium actif.

4. Catalyseur selon l'une ou plusieurs des revendications 1 à 3,
**caractérisé en ce que** l'oxyde de métal de terres rares dans les oxydes mixtes de cérium/zirconium/métal de terres rares est un mélange d'oxyde de lanthane et d'oxyde d'yttrium.

5. Catalyseur selon l'une ou plusieurs des revendications 1 à 4,
**caractérisé en ce que** la proportion de l'oxyde de métal de terres rares dans l'oxyde mixte de cérium/zirconium/métal de terres rares dans la couche A va de 1 à 12 % en poids, de préférence de 3 à 10 % en poids et de manière particulièrement préférée de 6 à 9 % en poids, respectivement par rapport à l'oxyde mixte de cérium/zirconium/métal de terres rares.

6. Catalyseur selon l'une ou plusieurs des revendications 1 à 5,
**caractérisé en ce que** la proportion de l'oxyde de métal de terres rares dans l'oxyde mixte de cérium/zirconium/métal de terres rares dans la couche B va de 2 à 25 % en poids, de préférence de 10 à 20 % en poids et de manière particulièrement préférée de 14 à 18 % en poids, respectivement par rapport à l'oxyde mixte de cérium/zirconium/métal de terres rares.

7. Catalyseur selon l'une ou plusieurs des revendications 1 à 6,
**caractérisé en ce que** le rapport pondéral de l'oxyde de cérium à l'oxyde de zirconium dans l'oxyde mixte de cérium/zirconium/métal de terres rares dans la couche A va de 0,1 à 1,0, de préférence de 0,2 à 0,7, de manière particulièrement préférée de 0,3 à 0,5.

8. Catalyseur selon l'une ou plusieurs des revendications 1 à 7,
**caractérisé en ce que** le rapport pondéral de l'oxyde de cérium à l'oxyde de zirconium dans l'oxyde mixte de cérium/zirconium/métal de terres rares dans la couche B va de 0,1 à 1,0, de préférence de 0,2 à 0,7, de manière particulièrement préférée de 0,3 à 0,5.

9. Catalyseur selon l'une ou plusieurs des revendications 1 à 8,
**caractérisé en ce qu'**il comprend deux couches sur un support de catalyseur inerte, dans lequel
• une couche A contient du palladium, un oxyde d'aluminium actif, ainsi qu'un oxyde mixte de cérium/zirconium/lanthane/yttrium et
• une couche B appliquée sur la couche A contient du rhodium ou du palladium et du rhodium, un oxyde d'aluminium actif, ainsi qu'un oxyde mixte de cérium/zirconium/lanthane/yttrium,
**caractérisé en ce que** la proportion de la somme d'oxyde de lanthane et d'oxyde d'yttrium dans l'oxyde mixte de cérium/zirconium/lanthane/yttrium de la couche A est inférieure à la proportion de la somme de l'oxyde de lanthane et de l'oxyde d'yttrium dans l'oxyde mixte de cérium/zirconium/lanthane/yttrium de la couche B, calculées respectivement en % en poids et par rapport à l'oxyde mixte de cérium/zirconium/métal de terres rares.

10. Catalyseur selon la revendication 9, **caractérisé en ce que** la proportion de la somme constituée d'oxyde de lanthane et d'oxyde d'yttrium va, dans l'oxyde mixte de cérium/zirconium/lanthane/yttrium de la couche A, de 6 à 9 % en poids par rapport à l'oxyde mixte de cérium/zirconium/lanthane/yttrium de la couche A et, dans l'oxyde mixte de cérium/zirconium/lanthane/yttrium de la couche B, de 14 à 18 % en poids par rapport à l'oxyde mixte de cérium/zirconium/lanthane/yttrium de la couche B, calculées respectivement en % en poids et par rapport à l'oxyde mixte de cérium/zirconium/métal de terres rares.
